# EUROPÄISCHE PATENTSCHRIFT

(11) **EP 1 829 760 B1**
(45) Veröffentlichungstag und Bekanntmachung des Hinweises auf die Patenterteilung: **07.04.2010**
(21) Anmeldenummer: 07101103.5
(22) Anmeldetag: 24.01.2007
(51) Int. Cl.: B60W 40/02

(54) **Fahrerassistenzsystem mit Kursprädiktionsmodul**
Driver assistance system with course prediction model
Système d'assistance à la conduite doté d'un module de prévision de trajectoire

(30) Priorität: 02.03.2006 DE 102006009656
(43) Veröffentlichungstag der Anmeldung: 05.09.2007
(73) Patentinhaber: ROBERT BOSCH GMBH, 70442 Stuttgart (DE)
(72) Erfinder: Urban, Werner, 71665 Vaihingen/Enz (DE); Gibson, Brendan, 70176 Stuttgart (DE)

(56) Entgegenhaltungen:
- EP-A- 1 332 910
- EP-A- 1 598 233
- EP-A- 1 612 083
- WO-A-01/79013
- WO-A-02/21156
- GB-A- 2 358 975
- US-A- 5 926 126

## Beschreibung

### Stand der Technik

Die Erfindung betrifft ein Fahrerassistenzsystem mit einem Kursprädiktionsmodul, das eine Auswerteeinheit zur Auswertung einer Kollektivbewegung vorausfahrender Fahrzeuge aufweist.

Ein Beispiel eines solchen Fahrerassistenzsystems ist ein sogenanntes ACC-System (Adpative Cruise Control), das mit Hilfe eines Radarsensors vorausfahrende Fahrzeuge ortet, deren Abstände, Relativgeschwindigkeiten und Azimutwinkel mißt und die Geschwindigkeit des eigenen Fahrzeugs automatisch so anpaßt, daß ein auf der eigenen Spur unmittelbar vorausfahrendes Fahrzeug, das sogenannte Zielobjekt, in einem angemessenen Sicherheitsabstand verfolgt wird.

Andere Beispiele für Fahrerassistenzsysteme, bei denen die Erfindung Anwendung finden kann, sind Kollisionswarnsysteme und sogenannte Pre-Crash-Systeme, die dazu dienen, eine Kollision mit einem anderen Fahrzeug zu verhindern oder zumindest die Kollisionsfolgen abzumildern.

Das Kursprädiktionsmodul hat die Aufgabe, den voraussichtlichen Kurs des eigenen Fahrzeugs zu berechnen, damit beispielsweise bei einem ACC-System entschieden werden kann, ob es sich bei einem georteten vorausfahrenden Fahrzeug um ein Fahrzeug auf der eigenen Spur oder aber um ein Fahrzeug auf einer Nebenspur handelt, das nicht als Zielobjekt für die Abstandsregelung in Frage kommt. Die Kursprädiktion beruht im wesentlichen auf fahrdynamische Größen des eigenen Fahrzeugs, beispielsweise der gemessenen Gierrate oder Giergeschwindigkeit. In instationären Situationen, beispielsweise bei der Einfahrt in eine Kurve oder bei der Ausfahrt aus einer Kurve, kann es dabei jedoch zu einem systematischen Fehler und somit zu einer falschen Spurzuordnung des vorausfahrenden Fahrzeugs kommen, mit der Folge, daß bei der Geschwindigkeitsregelung unerwünschte Nebenspurstörungen auftreten.

Zur Verbesserung der Kursprädiktion ist es bekannt, die Kollektivbewegung der georteten vorausfahrenden Fahrzeuge relativ zum eigenen Fahrzeug zu berücksichtigen. Diese Kollektivbewegung kann beispielsweise durch ein gewichtetes Mittel der Querbewegungen aller georteten vorausfahrenden Fahrzeuge repräsentiert werden. Wenn sich beispielsweise alle georteten Fahrzeuge relativ zum eigenen Fahrzeug nach links bewegen, so ist die Annahme plausibel, daß das eigene Fahrzeug sich vor der Einfahrt in eine Linkskurve befindet, und der vorausberechnete Kurs des eigenen Fahrzeugs wird dann entsprechend nach links korrigiert. Diese Funktion wird auch als ECP-Funktion (Environmental Course Prediction) bezeichnet.

Ein Fahrerassistenzsystem nach dem Oberbegriff des Anspruchs 1 ist aus der WO 02/21156 A2 bekannt.

### Offenbarung der Erfindung

Aufgabe der Erfindung ist es, die Kursprädiktion bei Fahrerassistenzsystemen weiter zu verbessern.

Diese Aufgabe wird mit den in Anspruch 1 angegebenen Merkmalen gelöst.

Die Erfindung bietet die Möglichkeit, je nach Situation zu entscheiden, ob und gegebenenfalls in welchem Ausmaß die Kollektivbewegung Berücksichtigung findet. Ein geeignete Kriterium für diese Entscheidung ist der Straßentyp der derzeit befahrenen Straße, insbesondere die Anzahl der Fahrspuren.

Ein besonders geeignetes Kriterium ist die vom ACC-System ohnehin bereitgestellte Landstraßenwahrscheinlichkeit, ein Parameter, der angibt, mit welcher Wahrscheinlichkeit es sich bei der derzeit befahrenen Straße um eine Landstraße mit nur einer Richtungsfahrbahn handelt. Diese Landstraßenwahrscheinlichkeit läßt sich bei einem ACC-System mit einem Radarsensor beispielsweise durch statistische Auswertung der gemessenen Querversätze vorausfahrender Fahrzeuge bestimmen. Da auf einer Landstraße eher mit engen Kurven gerechnet werden muß, gegebenenfalls auch nach einem längeren geraden Streckenabschnitt, wird man in der Tendenz bei hoher Landstraßenwahrscheinlichkeit die Kollektivbewegung eher berücksichtigen bzw. stärker gewichten.

Vorteilhafte Ausgestaltungen und Weiterbildungen der Erfindung ergeben sich aus den Unteransprüchen.

Weitere geeignete Kriterien für die oben genannte Entscheidung sind etwa die Häufigkeit und Enge der Kurven, sowie die Anzahl der das Kollektiv bildenden vorausfahrenden Fahrzeuge. Parameter, die eine Prüfung dieser Kriterien ermöglichen, werden in bekannten ACC-Systemen häufig ohnehin im Zusammenhang mit anderen Systemfunktionen berechnet und stehen daher unmittelbar zur Verfügung. Die Erfindung läßt sich daher mit einem geringen Zusatzaufwand an Hardware und Rechenzeit umsetzen.

Dadurch gelingt es, spezielle Verkehrssituationen besser zu beherrschen, in denen sich die Berücksichtigung der Kollektivbewegung der vorausfahrenden Fahrzeuge eher als nachteilig erweist. Als Beispiel kann die Situation betrachtet werden, daß das eigene Fahrzeug auf der Überholspur einer mehrspurigen Fahrbahn fährt und daß vom Radarsystem nur ein einziges vorausfahrendes Fahrzeug geortet wird, das mit relativ niedriger Geschwindigkeit ebenfalls auf der Überholspur fährt und somit eine Anpassung der Geschwindigkeit des eigenen Fahrzeugs erzwingt. Das gesamte "Kollektiv" vorausfahrender Fahrzeuge wird dann durch dieses einzige Fahrzeug repräsentiert. Führt dieses Fahrzeug nun einen Spurwechsel auf die rechte Nebenspur aus, so sollte eigentlich das eigene Fahrzeug möglichst unverzüglich wieder auf die vom Fahrer gewählte Wunschgeschwindigkeit beschleunigt werden, damit das langsamere Fahrzeug möglichst zügig überholt werden kann. Die Berücksichtigung der Kollektivbewegung führt jedoch in diesem Fall dazu, daß der vorausberechnete Fahrkorridor für das eigene Fahrzeug ebenfalls nach rechts schwenkt und somit das langsamere vorausfahrende Fahrzeug länger in diesem Fahrkorridor bleibt und weiterhin als Zielobjekt verfolgt wird, so daß der Beschleunigungsvorgang erst verzögert eingeleitet werden kann. Eine ähnliche Situation kann sich auf Landstraßen ergeben, wenn das langsamere vorausfahrende Fahrzeug abbiegt. Andererseits gibt es jedoch gerade auf Landstraßen auch Situationen, in denen eine Berücksichtigung der Kollektivgeschwindigkeit sinnvoll und erwünscht ist, beispielsweise auf einer kurvenreichen Strecke, auf der es ohne Berücksichtigung der Kollektivbewegung relativ häufig vorkäme, daß das Zielobjekt vorübergehend verloren geht, was zu einer unruhigen, kraftstoffverbrauchenden Fahrweise des eigenen Fahrzeugs mit häufigen Geschwindigkeitswechseln führen würde.

In einer einfachen Ausführungsform variiert das Gewicht, mit dem die Kollektivbewegung in die Kursprädiktion eingeht, lediglich zwischen den Werten 0 und 1, d. h., die Kollektivbewegung wird entweder berücksichtigt oder nicht. Es sind jedoch auch Ausführungsformen möglich, bei denen das Gewicht je nach Situation beliebige Werte zwischen 0 und 1 annehmen kann.

Ein zweckmäßiges Kriterium für die Entscheidung, ob und in wieweit die Kollektivbewegung zu berücksichtigen ist, ist die Anzahl der das Kollektiv bildenden Fahrzeuge. Beispielsweise kann in einer Ausführungsform vorgesehen sein, daß die Kollektivbewegung berücksichtigt wird, wenn das Kollektiv aus mindestens zwei Fahrzeugen besteht. Wenn dann eines der Fahrzeuge abbiegt oder einen Spurwechsel vornimmt, so geht dessen Querbewegung mit höchstens 50 % in die Kollektivbewegung ein, so daß der Einfluß auf den berechneten Kurs des eigenen Fahrzeugs ohnehin schon relativ gering ist. Wenn dagegen nur ein einziges vorausfahrendes Fahrzeug geortet wird, ist es zweckmäßig, die "Kollektivbewegung" unberücksichtigt zu lassen, zumindest dann, wenn zusätzlich noch mindestens ein weiteres Kriterium erfüllt ist.

Ein anderes geeignetes Kriterium ist ein "Kurvigkeitsmaß" für die befahrene Straße, d. h., ein Maß, das angibt, wie kurvenreich die Straße ist und wie eng die Kurven im Durchschnitt sind. Dieses Maß läßt sich beispielsweise bestimmen, indem ein gleitender Mittelwert der Beträge oder Quadrate der in einem unmittelbar zurückliegenden Zeitabschnitt aufgetretenen Gierraten des eigenen Fahrzeugs gebildet wird.

In einer bevorzugten Ausführungsform bildet die Anzahl der zum Kollektiv gehörenden Fahrzeuge das Hauptkriterium. Wenn diese Anzahl beispielsweise größer als 2 ist, wird die Kollektivbewegung generell berücksichtigt. Ist sie kleiner als 2, wird dagegen ein Zustatzkriterium ausgewertet, das sowohl von der Landstraßenwahrscheinlichkeit als auch vom Kuvigkeitsmaß abhängig ist, beispielsweise in der Form einer logischen Verknüpfung von Schwellenwertkriterien für die beiden Parameter oder in der Form eines Kriteriums für einen aus beiden Parametern gebildeten Mischparameter.

Selbstverständlich sollte die Berücksichtigung der Kollektivbewegung auch dann unterbleiben, wenn das eigene Fahrzeug einen Abbiegevorgang oder Spurwechsel vornimmt, was anhand des Zustands des Fahrtrichtungsanzeigers (Blinkers) zu erkennen ist.

### Zeichnung

Ein Ausführungsbeispiel der Erfindung ist in den Zeichnungen dargestellt und in der nachfolgenden Beschreibung näher erläutert.

### Es zeigen:

- Figur 1: ein Blockdiagramm eines erfindungsgemäßen Fahrerassistenzsystems;
- Figur 2: ein Flußdiagramm zur Erläuterung der Arbeitsweise des Systems; und
- Figuren 3 und 4: skizzenhafte Darstellungen von Verkehrssituationen zur Illustration der Wirkungsweise des Systems.

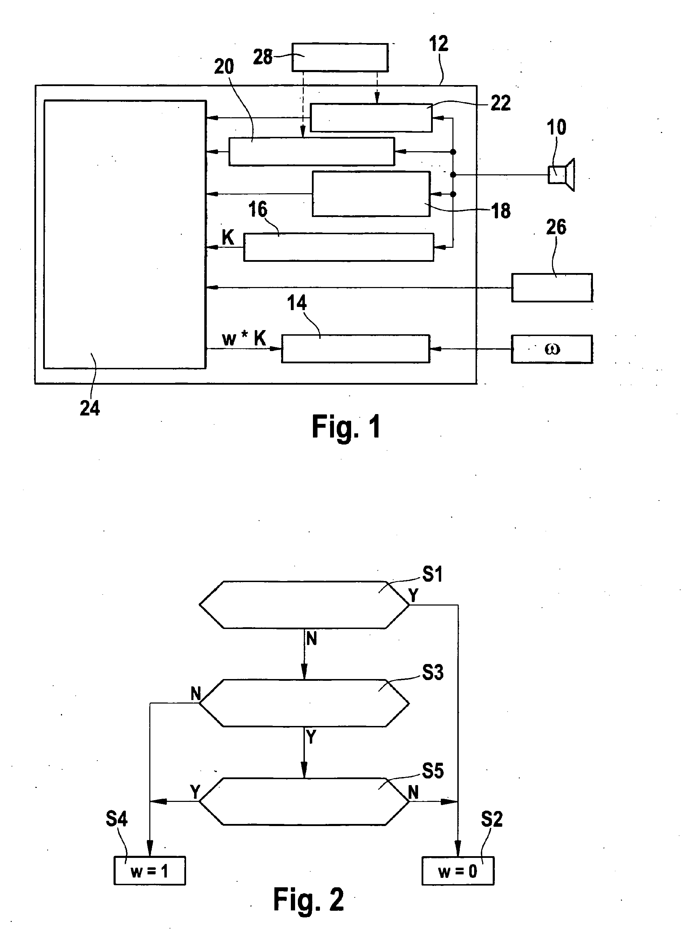

Figur 1 zeigt ein ACC-System, dessen wesentliche Komponenten ein Radarsensor 10 und ein elektronisches Datenverarbeitungssystem 12 sind. Das Datenverarbeitungssystem 12 wertet die Meßdaten des Radarsensors 10 sowie einige zusätzliche Informationen aus und regelt anhand dieser Daten in bekannter Weise die Geschwindigkeit des eigenen Fahrzeugs. Ein Funktionsmodul des Datenverarbeitungssystems 12 ist ein Kursprädiktionsmodul 14, das dazu dient, den voraussichtlichen Kurs des eigenen Fahrzeugs zu bestimmen, in erster Linie anhand der gemessenen Gierrate w des eigenen Fahrzeugs. Das Kursprädiktionsmodul 14 berechnet einen sogenannten Fahrkorridor, dessen Breite etwa der Breite des eigenen Fahrzeugs entspricht und dessen Verlauf den voraussichtlichen Kurs des eigenen Fahrzeugs wiedergibt. Nur wenn ein vom Radarsensor geortetes Objekt innerhalb dieses Fahrkorridors liegt, kommt es als Zielobjekt für die Abstandsregelung in Betracht.

Zur Verbesserung der Kursprädiktion weist das Datenverarbeitungssystem 12 eine Auswerteeinheit 16 auf, die die Kollektivbewegung der vom Radarsensor 10 georteten vorausfahrenden Fahrzeuge auswertet, insbesondere die kollektive Querbewegung, damit anhand dieser Daten die aufgrund der Gierrate w berechnete Kursprädiktion korrigiert werden kann, insbesondere bei der Einfahrt in eine Kurve oder bei der Ausfahrt aus einer Kurve, also dann, wenn die Gierrate w des eigenen Fahrzeugs den tatsächlichen Kursverlauf nicht korrekt wiedergibt.

Im gezeigten Beispiel weist das Datenverarbeitungssystem 12 drei weitere Module 18, 20 und 22 auf, die aus den Ortungsdaten des Radarsensors 10 drei zusätzliche Parameter ableiten, die unter anderem für eine Verbesserung der Kursprädiktion hilfreich sind. Das Modul 18 zählt die Anzahl der vom Radarsensor 10 georteten vorausfahrenden Fahrzeuge, also die Anzahl der Objekte, deren Kollektivbewegung in der Auswerteeinheit 16 ausgewertet wird. Das Modul 20 berechnet - beispielsweise anhand der in der Vergangenheit gemessenen Gierraten w - ein Kurvigkeitsmaß, das bei einer extrem kurvenreichen Strecke, etwa einer Paßstraße, den Wert 1 und bei einer langen geraden Strecke den Wert 0 hat. Das Modul 22 bestimmt den Straßentyp oder, genauer, eine Landsstraßenwahrscheinlichkeit als Maß für die Wahrscheinlichkeit, daß es sich bei der derzeit befahrenen Straße um eine Landstraße mit nur einer Richtungsfahrbahn handelt.

Eine Entscheidungseinheit 24 entscheidet anhand der drei oben genannten Parameter der Module 18, 20 und 22 sowie zusätzlich anhand des von einem Blinkschalter 26 gemeldeten Zustands des Fahrtrichtungsanzeigers, mit welchem Gewicht w die von der Auswerteeinheit 16 ermittelten Kollektivbewegung K der vorausfahrenden Fahrzeuge in die Berechnung der Kursprädiktion im Kursprädiktionsmodul 14 eingeht.

In dem in Figur 1 gezeigten Beispiel werten die Module 20 und 22 bei der Bestimmung des Straßentyps und des Kurvigkeitsmaßes auch Informationen eines gegebenenfalls zusätzlich vorhandenen Navigationssystems 28 aus. Zwar können die Daten des Navigationssystems 28 auch direkt zur Kursprädiktion herangezogen werden, doch ist es aufgrund der begrenzten Auflösung der digitalen Karten und der begrenzter Meßgenauigkeit der verfügbaren GPS-Systeme dennoch zweckmäßig, zur Verbesserung der Kursprädiktion die Gierrate w und die Kollektivbewegung K heranzuziehen.

In Figur 2 ist die Funktionsweise der Entscheidungseinheit 24 anhand eines Flußdiagramms dargestellt. Das Flußdiagramm illustriert eine Programmeroutine, die in der Entscheidungseinheit 24 periodisch abgearbeitet wird. In Schritt S 1 wird anhand der vom Blinkschalter 26 gelieferten Daten entschieden, ob der rechte oder linke Blinker des eigenen Fahrzeugs gesetzt ist. Wenn dies der Fall ist (Y) wird in Schritt S2 ohne weitere Überprüfungen das Gewicht w auf 0 gesetzt, d. h., die Kollektivbewegung K wird bei der Kursprädiktion nicht berücksichtigt. Ist dagegen weder der rechte noch der linke Blinker gesetzt (N), so wird in Schritt S3 anhand der vom Modul 18 gelieferten Informationen geprüft, ob die Anzahl der georteten vorausfahrenden Fahrzeuge kleiner als 2 ist. Wenn dies nicht der Fall ist, wenn also das Kollektiv der vorausfahrenden georteten Fahrzeuge mindestens zwei Fahrzeuge umfaßt, so wird in Schritt S4 ohne weitere Überprüfung das Gewicht w auf 1 gesetzt, d. h., die Kollektivbewegung K der mindestens zwei Fahrzeuge wird bei der Kursprädiktion ausgewertet.

Wenn in Schritt S3 die Anzahl der Fahrzeuge kleiner ist als 2, so wird in Schritt S5 weiter geprüft, ob die derzeit von dem eigenen Fahrzeug befahrene Straße eine kurvenreiche Landstraße ist. Im einzelnen kann dieses Kriterium beispielsweise darin bestehen, daß die vom Modul 22 gemeldete Landstraßenwahrscheinlichkeit mindestens 0,5 beträgt und gleichzeitig das vom Modul 20 gemeldete Kurvigkeitsmaß mindestens 0,3 beträgt. Wenn dieses Kriterium erfüllt ist, erfolgt eine Verzweigung zu Schritt S4, d.†h., die Kollektivbewegung K wird auch dann ausgewertet, wenn das "Kollektiv" nur aus einem einzigen Fahrzeug besteht. Auf diese Weise wird sichergestellt, daß das vorausfahrende Fahrzeug auch auf einer kurvenreichen Strecke im jeweils berechneten Fahrkorridor bleibt und somit kontinuierlich als Zielobjekt verfolgt werden kann. Bei einem negativen Ergebnis der Überprüfung in Schritt S5 wird dagegen zu Schritt S2 verzweigt, d. h., die Kollektivbewegung K wird nicht ausgewertet. Bei kurvenarmen und/oder mehrspurigen Straßen läßt sich so vermeiden, daß ein Abbiege- oder Spurwechselvorgang des vorausfahrenden Fahrzeugs sich unangemessen auf die Abstandsregelung auswirkt.

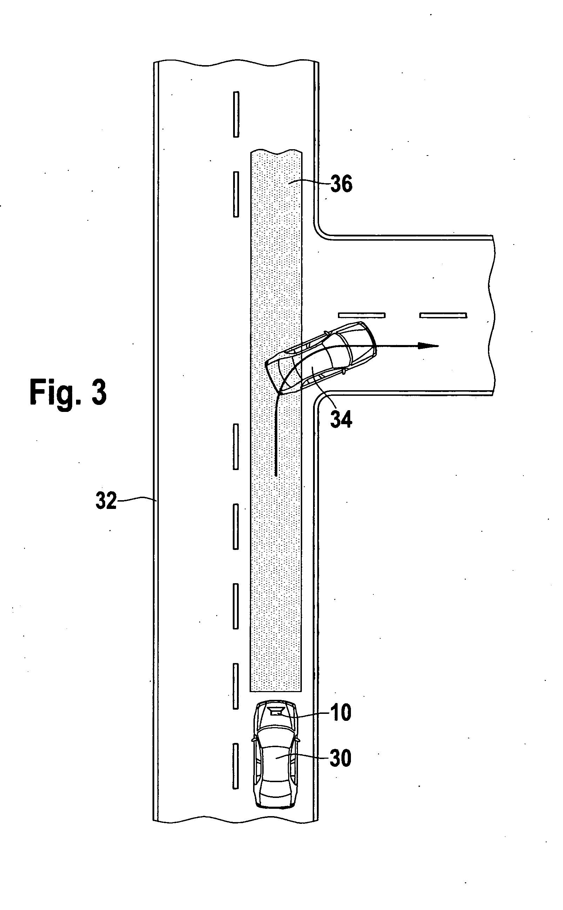

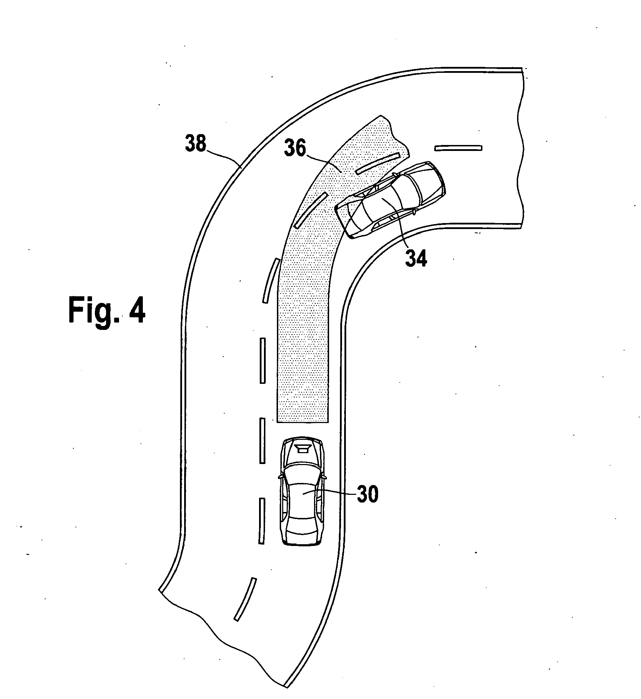

Dies wird durch die in Figuren 3 und 4 gezeigten Beispielsituationen verdeutlicht.

In Figur 3 befährt ein mit dem ACC-System nach Figur 1 ausgerüstetes Fahrzeug 30 eine Landstraße 32 mit nur einer Richtungsfahrbahn. Diese Straße verläuft jedoch geradlinig, ist also nicht kurvenreich. Vom Radarsensor 10 wird nur ein einziges vorausfahrendes Fahrzeug 34 geortet, das gerade nach rechts in eine Nebenstraße abbiegt. In diesem Fall hat die Abfrage in Schritt S3 in Figur 2 das Ergebnis: "ja", die Abfrage in Schritt S5 hat jedoch das Ergebnis "nein", so daß das Gewicht w auf null gesetzt ist. Die Querbewegung des Fahrzeugs 34 hat folglich keine Auswirkung auf den vom Kursprädiktionsmodul berechneten Fahrkorridor 36. Dieser bleibt weiter geradeaus gerichtet, und sobald das Fahrzeug 34 diesen Korridor verlassen hat, wird das Fahrzeug 30 wieder beschleunigt.

In Figur 4 befahren dagegen die Fahrzeuge 30 und 34 eine kurvenreiche Landstraße 38. Das Fahrzeug 30 befindet sich auf einem geraden Streckenabschnitt, so daß das Kursprädiktionsmodul 14 allein anhand der Gierrate w einen geraden Verlauf des Fahrkorridors prädizieren würde. In diesem Fall führt jedoch ein positives Ergebnis der Abfrage in Schritt S5 in Figur 2 dazu, daß das Gewicht w auf 1 gesetzt ist und somit die Querbewegung des Fahrzeugs 34 bei der Kursprädiktion berücksichtigt wird. Dies führt zu einer Krümmung des Fahrkorridors 36 nach rechts, wie in Figur 4 dargestellt ist. Folglich verbleibt das vorausfahrende Fahrzeug 34 im gekrümmten Fahrkorridor 36, und die Abstandsregelung kann trotz des kurvenreichen Verlaufs der Straße weitgehend ununterbrochen fortgesetzt werden.

## Patentansprüche

1. Fahrerassistenzsystem mit einem Kursprädiktionsmodul (14), das eine Auswerteeinheit (16) zur Auswertung einer Kollektivbewegung (K) vorausfahrender Fahrzeuge (34) und eine Entscheidungseinheit (24) aufweist, die dazu eingerichtet ist, das Gewicht (w), mit dem die Kollektivbewegung (K) in die Kursprädiktion eingeht, in Abhängigkeit von mindestens einem das Verkehrsumfeld betreffenden Kriterium zu variieren, **dadurch gekennzeichnet, daß** ein Modul (22) zur Bestimmung des Straßentyps vorgesehen ist und daß ein das Gewicht (w) erhöhendes Kriterium darin besteht, daß die von diesem Modul (22) bestimmte Wahrscheinlichkeit dafür, daß es sich bei dem Straßentyp um eine Landstraße mit nur einer Richtungsfahrbahn handelt, größer als ein vorbestimmter Wert ist.

2. Fahrerassistenzsystem nach Anspruch 1, **dadurch gekennzeichnet, daß** das Gewicht (w) nur zwischen den Werten 0 und 1 wechselt.

3. Fahrerassistenzsystem nach Anspruch 1 oder 2, **dadurch gekennzeichnet, daß** ein weiteres zur Erhöhung des Gewichts (w) führendes Kriterium darin besteht, daß die Anzahl der vorausfahrenden Fahrzeuge (34), deren Kollektivbewegung (K) auswertbar ist, mindestens gleich einer vorbestimmten Anzahl ist.

4. Fahrerassistenzsystem nach einem der vorstehenden Ansprüche, **dadurch gekennzeichnet, daß** ein Modul (20) zur Bestimmung eines Kurvigkeitsmaßes der befahrenen Straße (32; 38) vorgesehen ist und daß ein weiteres das Gewicht (w) erhöhendes Kriterium darin besteht, daß das Kurvigkeitsmaß größer als ein bestimmter Wert ist.

5. Fahrerassistenzsystem nach einem der vorstehenden Ansprüche, **dadurch gekennzeichnet, daß** die Entscheidungseinheit (24) dazu eingerichtet ist, das Gewicht (w) zu verringern, wenn alle drei der folgenden Bedingungen erfüllt sind:
(a)die Wahrscheinlichkeit dafür, daß es sich bei dem Straßentyp um eine Landstraße mit nur einer Richtungsfahrbahn handelt, ist nicht größer als ein vorbestimmter Wert,
(b) die Anzahl der vorausfahrenden Fahrzeuge ist kleiner als eine vorbestimmte Anzahl, und
(c)das Kurvigkeitsmaß ist nicht größer als ein bestimmter Wert.

6. Fahrerassistenzsystem nach einem der vorstehenden Ansprüche, **dadurch gekennzeichnet, daß** die Entscheidungseinheit (24) ein Signal eines Blinkschalters (26) erhält und dazu eingerichtet ist, das Gewicht (w) auf 0 zu verringern, wenn der rechte oder linke Fahrrichtungsanzeiger des Fahrzeugs gesetzt ist.

## Claims

1. Driver assistance system with a course prediction module (14) which has an evaluation unit (16) for evaluating a collective movement (K) of vehicles (34) travelling in front, and a decision unit (24) which is configured to vary the weighting (w) with which the collective movement (K) is included in the course prediction, as a function of at least one criterion which relates to the traffic environment,
**characterized in that** a module (22) is provided for determining the type of road, and **in that** a criterion which increases the weighting (w) consists in the fact that the probability, determined by this module (22), of the type of road being a country road with just one lane in each direction is greater than a predetermined value.

2. Driver assistance system according to Claim 1,
**characterized in that** the weighting (w) changes only between the values 0 and 1.

3. Driver assistance system according to Claim 1 or 2, **characterized in that** a further criterion which leads to an increase in the weighting (w) consists in the fact that the number of vehicles (34) which are travelling in front and whose collective movement (K) can be evaluated is at least equal to a predetermined number.

4. Driver assistance system according to one of the preceding claims, **characterized in that** a module (20) is provided for determining a degree of bending of the road (32; 38) being travelled on, and **in that** a further criterion which increases the weighting (w) consists in the fact that the degree of bending is greater than a specific value.

5. Driver assistance system according to one of the preceding claims, **characterized in that** the decision unit (24) is configured to reduce the weighting (w) if all three of the following conditions are met:
(a) the probability of the type of road being a country road with just one lane in each direction is not greater than a predetermined value,
(b) the number of vehicles travelling in front is lower than a predetermined number, and
(c) the degree of bending is not greater than a specific value.

6. Driver assistance system according to one of the preceding claims, **characterized in that** the decision unit (24) receives a signal from a flashing indicator light switch (26) and is configured to reduce the weighting (w) to 0 if the right-hand or left-hand travel direction indicator of the vehicle is set.

## Revendications

1. Système d'assistance au conducteur, présentant un module (14) de prédiction de trajectoire doté d'une unité d'évaluation (16) qui évalue un déplacement collectif (K) de véhicules (34) circulant à l'avant et d'une unité de décision (24) conçue pour faire varier en fonction d'au moins un critère qui concerne l'environnement du trafic la pondération (w) selon laquelle le déplacement collectif (K) intervient dans la prédiction de trajectoire,
**caractérisé en ce que**
un module (22) de détermination du type de chaussée est prévu et **en ce qu'**un critère qui augmente la pondération (w) consiste **en ce que** la probabilité, déterminée par ce module (22), selon laquelle le type de chaussée est un chemin agricole qui présente une bande de circulation dans un seul sens, est supérieure à une valeur prédéterminée.

2. Système d'assistance au conducteur selon la revendication 1, **caractérisé en ce que** la pondération (w) ne peut prendre que les valeurs 0 ou 1.

3. Système d'assistance au conducteur selon les revendications 1 ou 2, **caractérisé en ce qu'**un autre critère qui conduit à une augmentation de la pondération (w) réside **en ce que** le nombre des véhicules (34) circulant à l'avant et dont le déplacement collectif (K) peut être évalué est au moins égal à un nombre prédéterminé.

4. Système d'assistance au conducteur selon l'une des revendications précédentes, **caractérisé en ce qu'**un module (20) de détermination du niveau de courbure de la chaussée (32; 38) sur laquelle on se déplace est prévu et **en ce qu'**un autre critère qui augmente la pondération (w) réside **en ce que** le niveau de courbure est supérieure à une valeur prédéterminée.

5. Système d'assistance au conducteur selon l'une des revendications précédentes, **caractérisé en ce que** l'unité de décision (24) est conçue pour abaisser la pondération (w) si toutes les trois conditions suivantes sont satisfaites :
(a) la probabilité selon laquelle le type de chaussée est un chemin agricole qui présente une bande de circulation dans une seule direction n'est pas supérieure à une valeur prédéterminée,
(b) le nombre des véhicules circulant à l'avant est inférieur à un nombre prédéterminé et
(c) le niveau de courbure n'est pas supérieur à une valeur prédéterminée.

6. Système d'assistance au conducteur selon l'une des revendications précédentes, **caractérisé en ce que** l'unité de décision (24) reçoit un signal d'un commutateur de clignotant (26) et est conçu pour diminuer la pondération (w) à 0 lorsque l'indicateur de direction gauche ou droit du véhicule est branché.
